# EUROPÄISCHE PATENTSCHRIFT

(11) **EP 2 025 582 B1**
(45) Veröffentlichungstag und Bekanntmachung des Hinweises auf die Patenterteilung: **05.05.2010**
(21) Anmeldenummer: 08013653.4
(22) Anmeldetag: 30.07.2008
(51) Int. Cl.: B62D 29/00, B62D 33/04, B62D 25/20

(54) **Fahrzeugaufbau für insbesondere Kühlfahrzeuge**
Vehicle superstructure, particularly for refrigerated vehicles
Superstructure de véhicule automobile, en particulier pour véhicule réfrigérant

(30) Priorität: 13.08.2007 DE 102007038094
(43) Veröffentlichungstag der Anmeldung: 18.02.2009
(73) Patentinhaber: Fahrzeugwerk Bernard Krone GmbH, 48480 Spelle (DE)
(72) Erfinder: Krone Bernard, 22605 Hamburg (DE); Stegemann Ralf, 48429 Rheine (DE); Sasse Uwe, 49716 Meppen (DE); Möhlenkamp Wilhelm, 49757 Werite (DE); Nordhoff Frank, 27612 Loxstedt (DE)
(74) Vertreter: Pott, Ulrich

(56) Entgegenhaltungen:
- FR-A1- 2 671 532
- US-A- 2 275 349
- US-A- 5 054 843

## Beschreibung

Die Erfindung bezieht sich auf einen Fahrzeugaufbau für insbesondere Kühlfahrzeuge mit einem von einem Boden, einer Vorderwand, einer Rückwand, Seitenwänden sowie einem Dach umgrenzten Laderaum, wobei der Boden zumindest eine untere Trägerplatte, auf dieser festgelegte Querträger und zumindest eine auf den Querträgern abgestütze Bodenabdeckung des Laderaumes umfaßt. Ein solcher Fahrzeugaufbau ist in der US 5 054 843 A beschrieben.

Fahrzeugaufbauten der vorgenannten Art sind bekannt. Bekannte Bodengruppen solcher Fahrzeugaufbauten verwenden aus einem XPS-Schaum gefertigte Schaumblöcke, die mit der unteren Trägerplatte verklebt werden. Die XPS-Blöcke sind teilweise mit Querträgern vorgefertigt und werden für die Montage der Bodenabdeckung mit einem Klebstoff beschichtet. Zur Herstellung der Blöcke ist ein länger andauernder Preßvorgang in einer Vakuumpresse erforderlich, wobei nachfolgend Kontaktflächen spanabhebend zu bearbeiten sind, was das Entfernen von Kleberresten und das Erzeugen von maßhaltigen Anschlußflächen einschließt. Dies erfordert für die Herstellung eines Fahrzeugaufbaubodens eine Fertigungszeit von mehreren Stunden und den Einsatz von einer Anzahl von Arbeitskräften.

Die Fertigung des Bodens eines derartigen Fahrzeugaufbaus ist daher ausgesprochen aufwendig. Zudem verursacht ein XPS-Schaumblock hohe Materialkosten, obwohl sein Wärmedurchgangskoeffizient relativ klein ist. Dieser kann bei Kühlfahrzeugen nicht befriedigen.

Es ist daher Aufgabe der vorliegenden Erfindung, einen Fahrzeugaufbau mit einer optimierten Bodengruppe zur Verfügung zu stellen.

Zur Lösung dieser Aufgabe zeichnet sich der Fahrzeugaufbau der eingangs genannten Art dadurch aus, daß die Querträger unterteilt sind in mit Abstand voneinander angeordnete Querträger ohne Durchtrittsöffnungen und in Querträgern mit Durchtrittsöffnungen, wobei zwischen jeweils zwei Querträgern ohne Durchtrittsöffnung zumindest ein Querträger mit Durchtrittsöffnungen vorgesehen ist, die ein Bodensegment bilden, das zumindest über eine Injektoröffnung mit einem Kunststoffschaum ausgeschäumt und bei dem der mit den Durchtrittsöffnungen versehene Querträger von dem Kunststoffschaum durchschäumt ist.

Damit ist ein Fahrzeugaufbau zur Verfügung gestellt, der mit einem deutlich geringerem Bauaufwand und damit deutlich kostengünstiger und schneller herzustellen ist. Insbesondere bei Verwendung eines PUR-Schaumes ist darüber hinaus noch ein weitaus besserer K-Wert zu erreichen als bei den bisherigen XPS-Schaumblöcken. Die Segmente zwischen zwei Querträgern, die nicht mit Durchtrittsöffnungen versehen sind, bilden dabei Kammern, die über die Injektoröffnung mit dem Kunststoffschaummaterial auszufüllen sind. Dabei können die Bodenträgersegmente auch vorzumontierende einzelne Segmente bilden. Beim Injizieren des Schaumes ist jedoch auch das Schäumen mehrerer Segmente bzw. Kammern möglich. Dabei werden die Bodensegmente optimal mit Schaum ausgefüllt und die mit den Durchtrittsöffnungen versehenen Querträger durchschäumt, so daß es durch den Schaum zu einem innigen Verbund von Querträgern, der unteren Trägerplatte und der Bodenabdeckung des Laderaumes kommt. Aufgrund des besseren K-Wertes ist in den fertigmontierten Fahrzeugbau insbesondere bei Kühlfahrzeugen eine interessante Energieeinsparung gegenüber herkömmlichen Aufbauten zu erzielen. Ein Polyurethanschaum ist wesentlich kostengünstiger herzustellen. Durch das Injizieren sind auch die gesundheitlichen Risiken für das Arbeitspersonal verringert. Zudem lassen sich Kabelkanäle ud.dgl. zusätzlich mit einschäumen, so daß diese vorzumontieren sind und mit dem anschließenden Ausschäumen integraler Bestandteil der Bodengruppe werden.

Hinsichtlich weiterer Vorteile der Erfindung wird auf die Ansprüche 2 bis 8, die weitere Beschreibung und die Zeichnung verwiesen. In der Zeichnung zeigen:

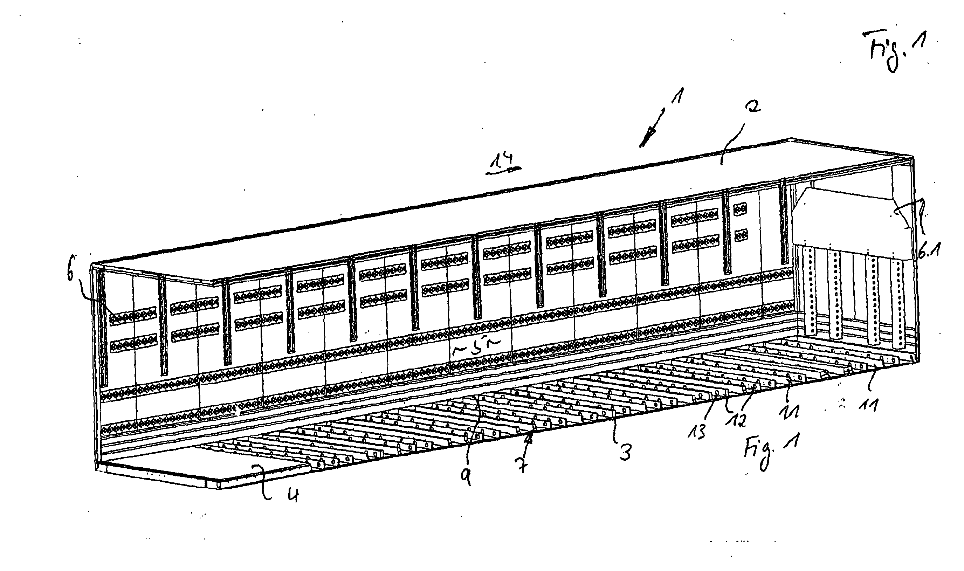

- Fig. 1: in einer perspektivischen Darstellung ein Ausführungsbeispiel eines Fahrzeugaufbaus nach der Erfindung mit Blick in den Laderaum bei weggelassener Seitenwand im vorderen Bereich und fehlenden Hecktüren,
- Fig. 2: vergrößert ein einzelnes Bodensegment, und

- Fig. 3: ein Ausführungsbeispiel eines Bodensegmentes mit eingeschäumtem Leitungsschacht zur Kabel- und Schlauchverlegung.

In der Zeichnung sind grundsätzlich gleichwirkende Teile mit übereinstimmenden Bezugsziffern versehen. Allgemein mit 1 ist der Fahrzeugaufbau beziffert, der beispielsweise als Fahrzeugaufbau eines Kühlfahrzeuges Verwendung finden soll. Dieser hat ein Dach 2, eine untere Trägerplatte 3, eine Bodenabdeckung 4 des allgemein mit 5 bezifferten Laderaumes, eine Seitenwand 6 und eine Vorderwand 6.1. Auf die Darstellung der Hecktüren sowie der in Fahrtrichtung gesehenen rechten Seitenwand ist aus Gründen der besseren Übersichtlichkeit wegen verzichtet worden.

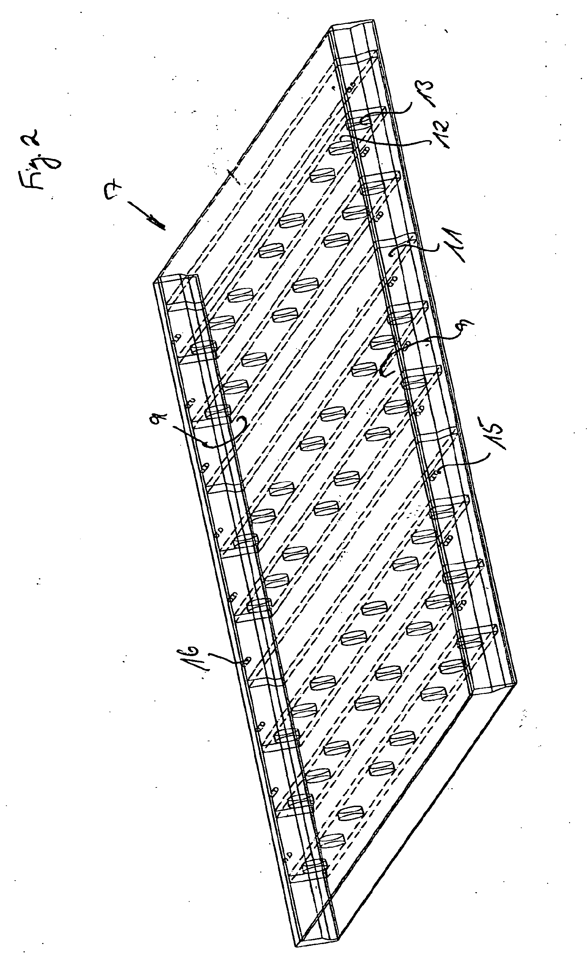

Der allgemein mit 7 bezifferte Boden umfaßt die untere Trägerplatte 3, die Bodenabdeckung 4, Schaumausfüllungen 9 sowie Querträger. Diese Querträger sind unterteilt in Querträger 10 sowie Querträger 11, die keine Durchtrittsöffnungen aufweisen und Querträger 12, die Durchtrittsöffnungen 13 haben. Dabei sind die Querträger 11, die keine Durchtrittsöffnungen aufweisen, in Fahrtrichtung 14 gesehen mit Abstand voneinander vorgesehen. Dadurch ist ein Bodensegment gebildet, das der Breite des Fahrzeugaufbaus entspricht und dem Abstand der beiden benachbarten Querträger 11, die keine Durchtrittsöffnungen aufweisen. Dieses so geschaffene Bodensegment kann durch Injektoröffnungen 15 und Entlüftungsöffnungen 16 (Fig. 2) mit einem PUR-Schaum vollständig ausgeschäumt werden. Dabei durchschäumt der PUR-Schaum die mit Durchtrittsöffnungen 13 versehenen Querträger 12 vollständig.

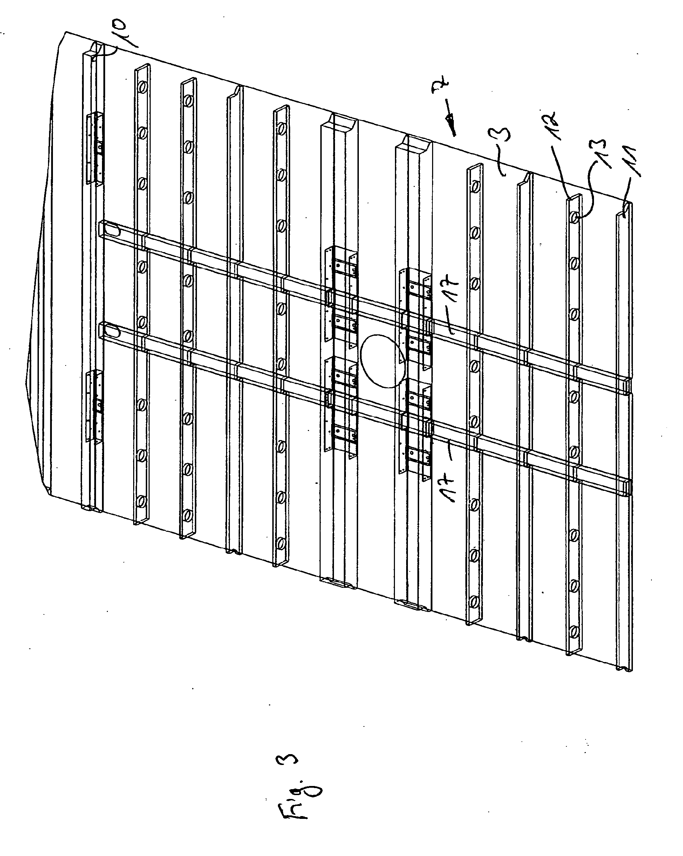

Wie Fig. 3 zu entnehmen ist, können dabei auch Leitungsschächte 17 zur Kabelschlauchverlegung mit integriert werden.

Dabei sind auch einzelne Bodensegmente vorzumontieren und können anschließend zu dem fertigen Boden insgesamt zusammengesetzt werden. Dabei können einzelne Bodensegmente auch mehrere nicht mit Durchtrittsöffnungen versehene Querträger umfassen.

Zur Fertigung der Bodengruppe können die Querträger auf die untere Trägerplatte beispielsweise über Schablonen gelegt werden. Hauptquerträger werden parallel aufgeklebt. Danach sind die vorzugsweise aus Holz oder anderen Wirkstoffen bestehenden Querträger ohne Durchtrittsöffnungen und die Querträger mit Durchtrittsöffnungen ebenfalls aufzukleben. Danach kann die Bodenabdeckung aufgelegt und fixiert werden, wonach der PUR-Schaum injiziert wird. Der PUR-Schaum kann in den Räumen expandieren und aushärten. Dies geschieht bevorzugtermaßen in einer Presse, wobei parallel mehrere Bodensegmente gepreßt und injiziert werden können. Danach ist keine nachfolgende Bearbeitung der Bodengruppe mehr notwendig. Danach steht eine Bodengruppe zur Verfügung, die hoch belastbar ist, einen sehr guten K-Wert aufweist und in einer deutlich schnelleren Zeit herzustellen ist als bekannte Bodengruppe nach dem Stand der Technik.

## Patentansprüche

1. Fahrzeugaufbau (1) für insbesondere Kühlfahrzeuge mit einem von einem Boden (7), einer Vorderwand (6.1), einer Rückwand, Seitenwänden (6) sowie einem Dach (2) umgrenzten Laderaum (5), wobei der Boden (7) zumindest eine untere Trägerplatte (3), auf dieser festgelegte Querträger und zumindest eine auf den Querträgern abgestützte Bodenabdeckung (4) des Laderaumes (5) umfaßt, **dadurch gekennzeichnet, daß** die Querträger unterteilt sind in mit Abstand voneinander angeordnete Querträger (11) ohne Durchtrittsöffnungen und in Querträger (12) mit Durchtrittsöffnungen (13), wobei zwischen jeweils zwei Querträgern (11) ohne Durchtrittsöffnungen zumindest ein Querträger (12) mit Durchtrittsöffnungen (13) vorgesehen ist und ein Bodensegment bilden, das über zumindest eine Injektoröffnung (15) mit einem Kunststoffschaum ausgeschäumt und bei dem der mit den Durchtrittsöffnungen (13) versehene Querträger (12) von dem Kunststoffschaum durchschäumt ist.

2. Fahrzeugaufbau nach Anspruch 1, **dadurch gekennzeichnet, daß** das Bodensegment mit einem PUR-(Polyurethan)-Schaum ausgeschäumt ist.

3. Fahrzeugaufbau nach Anspruch 1, **dadurch gekennzeichnet, daß** das Bodensegment zwei Querträger (11) ohne Durchtrittsöffnungen und zwei oder mehr Querträger (12) mit Durchtrittsöffnungen (13) umfaßt.

4. Fahrzeugaufbau nach einem der Ansprüche 1 bis 3, **dadurch gekennzeichnet, daß** die nicht mit Durchtrittsöffnungen versehenen Querträger (11) nicht metallische Querträger sind.

5. Fahrzeugaufbau nach einem der Ansprüche 1 bis 4, **dadurch gekennzeichnet, daß** die Querträger (11,12) auf die untere Trägerplatte (3) aufgeklebt sind.

6. Fahrzeugaufbau nach Anspruch 1, **dadurch gekennzeichnet, daß** an dem Bodensegment Entlüftungsöffnungen (16) vorgesehen sind.

7. Fahrzeugaufbau nach einem der Ansprüche 1 bis 5, **dadurch gekennzeichnet, daß** Hauptquerträger (10) vorgesehen sind, die keine Durchtrittsöffnungen haben und Teil eines Bodensegmentes sind.

8. Fahrzeugaufbau nach einem der Ansprüche 1 bis 6, **dadurch gekennzeichnet, daß** den Querträgern (10,11,12) Längsträgern (17) zugeordnet sind, die eine integrierte Kabelführung umfassen.

## Claims

1. Vehicle body (1) particularly for refrigerated vehicles, having a load-carrying space (5) bounded by a floor (7), a front wall (6.1), a rear wall, side-walls (6) and a roof (2), the floor (7) comprising at least one bottom supporting plate (3), cross-beams fastened to the latter and at least one floor deck (4) for the load-carrying space (5), which floor deck (4) is supported on the cross-beams, **characterized in that** the cross-beams are divided into cross-beams (11) which are arranged at a distance from one another and which do not have through-openings and cross-beams (12) which are arranged at a distance from one another and which do have through-openings (13), with at least one cross-beam (12) which does have through-openings (13) being provided between each pair of cross-beams (11) which do not have through-openings and creating a section of floor which is filled with a plastics foam via at least one injection opening (15) and in which the plastics foam is foamed to pass through the cross-beam (12) provided with the through-openings (13).

2. Vehicle body according to claim 1, **characterised in that** the section of floor is filled with a PUR (polyurethane) foam.

3. Vehicle body according to claim 1, **characterised in that** the section of floor comprises two cross-beams (11) which do not have through-openings and two or more cross-beams (12) which do have through-openings (13).

4. Vehicle body according to one of claims 1 to 3, **characterised in that** the cross-beams (11) which are not provided with through-openings are non-metallic cross-beams.

5. Vehicle body according to one of claims 1 to 4, **characterised in that** the cross-beams (11, 12) are adhesive-bonded to the bottom supporting plate (3).

6. Vehicle body according to claim 1, **characterised in that** air-venting openings (16) are provided at the section of floor.

7. Vehicle body according to one of claims 1 to 5, **characterised in that** main cross-beams (10) are provided which do not have through-openings and which are part of a section of floor.

8. Vehicle body according to one of claims 1 to 6, **characterised in that** the cross-beams (10, 11, 12) have associated with them longitudinal beams (17) which comprise a built-in cable guide.

## Revendications

1. Superstructure de véhicule (1) en particulier pour véhicules réfrigérants avec un espace de chargement (5) délimité par un fond (7), une paroi avant (6.1), une paroi arrière, des parois latérales (6) ainsi qu'un toit (2), le fond (7) comportant au moins une plaque de support (3) inférieure, des traverses fixées sur celle-ci et au moins un recouvrement de fond (4) de l'espace de chargement (5) en appui sur les traverses, **caractérisée en ce que** les traverses sont divisées en traverses (11) disposées à distance les unes des autres sans ouverture de passage et en traverses (12) avec des ouvertures de passage (13), entre respectivement deux traverses (11) sans ouverture de passage étant prévue au moins une traverse (12) avec des ouvertures de passage (13) et formant un segment de fond qui est moussé par au moins une ouverture d'injection (15) avec une mousse plastique et pour lequel la traverse (12) pourvue d'ouvertures de passage (13) est moussée par la mousse plastique.

2. Superstructure de véhicule selon la revendication 1, **caractérisée en ce que** le segment de fond est moussé avec une mousse de PUR (polyuréthane).

3. Superstructure de véhicule selon la revendication 1, **caractérisée en ce que** le segment de fond comporte deux traverses (11) sans ouverture de passage et deux traverses (12) ou plus avec des ouvertures de passage (13).

4. Superstructure de véhicule selon l'une quelconque des revendications 1 à 3, **caractérisée en ce que** les traverses (11) non pourvues d'ouvertures de passage sont des traverses non métalliques.

5. Superstructure de véhicule selon l'une quelconque des revendications 1 à 4, **caractérisée en ce que** les traverses (11, 12) sont collées sur la plaque de support (3) inférieure.

6. Superstructure de véhicule selon la revendication 1, **caractérisée en ce que** sur le segment de fond sont prévues des ouvertures d'aération (16).

7. Superstructure de véhicule selon l'une quelconque des revendications 1 à 5, **caractérisée en ce que** des traverses principales (10) sont prévues, lesquelles n'ont aucune ouverture de passage et font partie d'un segment de fond.

8. Superstructure de véhicule selon l'une quelconque des revendications 1 à 6, **caractérisée en ce que** des longerons (17) qui comportent un circuit de câblage intégré, sont associés aux traverses (10, 11, 12).
